# EUROPÄISCHE PATENTSCHRIFT

(11) **EP 3 701 081 B1**
(45) Veröffentlichungstag und Bekanntmachung des Hinweises auf die Patenterteilung: **06.12.2023**
(21) Anmeldenummer: 18796400.2
(22) Anmeldetag: 26.10.2018
(51) Int. Cl.: D06N 7/00, A41D 27/02, A41D 27/06, D06M 17/10

(54) **THERMISCH FIXIERBARES FLÄCHENGEBILDE**
THERMALLY FUSIBLE SHEET BODY
STRUCTURE PLATE THERMOFIXABLE

(30) Priorität: 27.10.2017 DE 102017010022; 19.04.2018 DE 102018109359
(43) Veröffentlichungstag der Anmeldung: 02.09.2020
(73) Patentinhaber: Carl Freudenberg KG, 69469 Weinheim (DE)
(72) Erfinder: TRASER, Steffen, 64291 Darmstadt (DE); KREMSER, Steffen, 68542 Heddesheim (DE)
(86) Internationale Anmeldenummer: PCT/EP2018/079386
(87) Internationale Veröffentlichungsnummer: WO 2019/081696

(56) Entgegenhaltungen:
- WO-A1-02/055577
- WO-A1-2005/035614
- WO-A1-2013/167250
- WO-A1-2016/169752
- WO-A2-2009/014973
- US-A- 3 252 848

## Beschreibung

Die Erfindung betrifft thermisch fixierbare Flächengebilde, insbesondere verwendbar als fixierbare Einlage- oder Futterstoffe in der Textilindustrie, die sich durch verbesserte anwendungstechnische Eigenschaften, durch verbesserte Post-Processing Eigenschaften, insbesondere bei Färbebehandlungen (Garment Dyeing) und eine verbesserte Verarbeitbarkeit auszeichnen, sowie deren Herstellung und Verwendung als Einlagen für Textilien.

Einlagestoffe sind das unsichtbare Gerüst der Bekleidung. Sie sorgen für korrekte Passformen und optimalen Tragekomfort. Je nach Anwendung unterstützen sie die Verarbeitbarkeit, erhöhen die Funktionalität und stabilisieren die Bekleidung. Neben der Bekleidung können diese Funktionen in technischen Textilanwendungen, wie z.B. der Möbel-, Polster- sowie Heimtextilien-Industrie Anwendung übernehmen.

Wichtige Eigenschaftsprofile für Einlagestoffe sind Weichheit, Sprungelastizität, Griff, Wasch- und Pflegebeständigkeit sowie ausreichende Abriebbeständigkeit des Trägermaterials im Gebrauch.

Einlagestoffe können aus Vliesstoffen, Geweben, Gewirken oder vergleichbaren textilen Flächengebilden bestehen, die meist zusätzlich mit einer Haftmasse versehen sind, wodurch die Einlage mit einem Oberstoff meist thermisch durch Hitze und/oder Druck verklebt werden kann (Fixiereinlage). Die Einlage wird somit auf einen Oberstoff laminiert. Die genannten verschiedenen textilen Flächengebilde haben je nach Herstellungsverfahren unterschiedliche Eigenschaftsprofile. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus zu einem Faserflor abgelegten Einzelfasern, die mechanisch, chemisch oder thermisch gebunden werden.

Bei mechanisch gebundenen Vliesstoffen wird das Faserflor durch mechanisches Verschlingen der Fasern verfestigt. Hierzu verwendet man entweder eine Nadeltechnik oder ein Verschlingen mittels Wasser- bzw. Dampfstrahlen. Die Vernadelung ergibt zwar weiche Produkte, allerdings mit relativ labilem Griff, so dass sich diese Technologie im Bereich der Einlagestoffe nur in ganz speziellen Nischen durchsetzen konnte. Außerdem ist man in der mechanischen Vernadelung üblicherweise auf ein Flächengewicht > 50 g/m² angewiesen, was für eine Vielzahl an Einlagestoffanwendungen zu schwer ist.

Mit Wasserstrahlen verfestigte Vliesstoffe lassen sich in niedrigeren Flächengewichten darstellen, sind im Allgemeinen aber flach und wenig sprungelastisch.

Bei chemisch gebundenen Vliesstoffen wird der Faserflor durch Imprägnieren, Besprühen oder mittels sonst üblicher Auftragsmethoden mit einem Bindemittel (z.B. Acrylatbinder) versehen und anschließend kondensiert. Das Bindemittel bindet die Fasern untereinander zu einem Vliesstoff, hat aber zur Folge, dass ein relativ steifes Produkt erhalten wird, da sich das Bindemittel über weite Teile des Faserflors verteilt erstreckt und die Fasern wie in einem Verbundwerkstoff durchgehend miteinander verklebt. Variationen im Griff bzw. Weichheit lassen sich nur bedingt über Fasermischungen oder Bindemittelauswahl kompensieren.

Thermisch gebundene Vliesstoffe werden zur Verwendung als Einlagestoffe üblicherweise Kalander- oder durch Heißluft-verfestigt. Bei Einlagevliesstoffen hat sich heutzutage die punktförmige Kalanderverfestigung als Standardtechnologie durchgesetzt. Das Faserflor besteht dabei in der Regel aus speziell für diesen Prozess entwickelten Fasern aus Polyester oder Polyamid und wird mittels eines Kalanders bei Temperaturen um den Schmelzpunkt der Faser verfestigt, wobei eine Walze des Kalanders mit einer Punktgravur versehen ist. Solch eine Punktgravur besteht z.B. aus 64 Punkten/cm² und kann z.B. eine Verschweißfläche von 12 % besitzen. Ohne eine Punktanordnung würde der Einlagestoff flächenartig verfestigt und ungeeignet hart im Griff sein.

Die oben beschriebenen unterschiedlichen Verfahren zur Herstellung von textilen Flächengebilden sind bekannt und in Fachbüchern und in der Patentliteratur beschrieben.

Die Haftmassen, welche üblicherweise auf Einlagestoffe aufgebracht sind, sind meist thermisch aktivierbar und bestehen in der Regel aus thermoplastischen Polymeren. Die Technologie zum Aufbringen dieser Haftmassenbeschichtungen erfolgt nach dem Stand der Technik in einem separaten Arbeitsschritt auf das Faserflächengebilde. Als Haftmassentechnologie sind üblicherweise Pulverpunkt-, Pastendruck-, Doppelpunkt-, Streu- und Hotmeltverfahren bekannt und in der Patentliteratur beschrieben. Als am leistungsfähigsten hinsichtlich Verklebung mit dem Oberstoff auch nach Pflegebehandlung und in Bezug auf die Rückvernietung wird heute die Doppelpunktbeschichtung angesehen.

Ein solcher Doppelpunkt weist einen zweischichtigen Aufbau auf. Er besteht aus einem Unter- und einem Oberpunkt. Der Unterpunkt dringt in das Basismaterial ein und dient als Sperrschicht gegen Haftmassenrückschlag und zur Verankerung der Oberpunktpartikel. Übliche Unterpunkte bestehen beispielsweise aus Bindemittel und/oder aus einem thermoplastischen Polymer, das bei der Fixierung zur Klebkraft mit beiträgt. Je nach eingesetzter Chemie trägt der Unterpunkt neben der Verankerung im Basismaterial auch als Sperrschicht zur Verhinderung des Haftmassenrückschlages bei. Hauptklebekomponente im zweischichtigen Verbund ist primär der Oberpunkt. Dieser kann aus einem thermoplastischen Material bestehen, welches als Pulver auf den Unterpunkt aufgestreut wird. Nach dem Streuvorgang wird der überschüssige Teil des Pulvers (zwischen den Punkten der unteren Schicht) zweckmäßigerweise wieder abgesaugt. Nach anschließendem Sintern ist der Oberpunkt auf dem Unterpunkt (thermisch) gebunden und kann als Klebstoff zum Oberpunkt dienen.

Je nach Einsatzzweck des Einlagestoffes werden eine unterschiedliche Anzahl an Punkten aufgedruckt und/oder die Haftmassenmenge oder die Geometrie des Punktmusters variiert. Eine typische Punktanzahl sind z.B. CP 110 bei einer Auflage von 9 g/m² bzw. CP 52 mit einer Auflagemenge von 11 g/m².

Weit verbreitet ist auch der Pastendruck. Bei dieser Technologie wird eine wässrige Dispersion aus thermoplastischen Polymeren, üblicherweise in Partikelform mit einer Partikelgröße < 80 µm, Verdickern und Laufhilfsmitteln hergestellt und dann pastös mittels eines Rotationssiebdruckverfahrens auf die Trägerlage meist punktförmig aufgedruckt. Anschließend wird die bedruckte Trägerlage zweckmäßigerweise einem Trocknungsprozess unterzogen.

Es ist bekannt, dass für Einlage- oder Futterstoffe als Haftmedien für die Heißverklebung verschiedenste Schmelzklebstoffe eingesetzt werden können.

Zurzeit stellen dünne, transparente, flexible oder offene Oberstoffe vor allem in der Damenoberbekleidung einen Trend in der Bekleidungsindustrie dar. Zur Unterstützung solcher Oberstoffe bietet sich eine Einlage an, die sehr leicht und offen in ihrer Struktur ist.

Die Beschichtung solcher Materialien mit gängigen wässrigen Pastensystemen stellt hierbei ein Problem dar, da diese Systeme beim Beschichtungsvorgang durch die Basis penetrieren und in den nachfolgenden Schritten die Produktionsanlagen erheblich verschmutzen. Hierdurch wird nicht nur die Artikelqualität erheblich verschlechtert, sondern die Produktionsanlagen müssen bedeutend öfter angehalten werden, um Maschinenteile aufwändig zu reinigen.

Des Weiteren führt die Penetration dazu, dass der Haftmassenunterpunkt nicht gut ausgebildet werden kann und nach dem Streuen des Puders (Doppelpunktbeschichtung) sich ein inhomogener, wenig konvexer Punkt ausbildet. Das Spreiten des Punktes hat weiter zur Folge, dass der Unterpunkt "verschmiert" ist, so dass das Puder in den Randbereichen des Unterpunktes und auch zum Teil in den Zwischenräumen nicht gut abgesaugt werden kann. Dies führt neben der Verunreinigung der Anlage zu einer Schwächung des Verbundes nach der Verklebung.

Ein weiterer Nachteil der bekannten Haftmassenunterpunkte ist, dass sie für Nachbehandlungsprozesse, insbesondere "Garment Dyeing" Anwendungen nur bedingt geeignet sind und auch bei vergleichsweise hohen Fixierbedingungen/- temperaturen appliziert werden müssen.

Die Aufgabe der vorliegenden Erfindung besteht darin, textile Flächengebilde umfassend eine Trägerlage aus einem textilen Material, auf welcher eine Polyurethanbeschichtung aufgebracht ist, bereitzustellen, die ausgezeichnete Post-Processing Eigenschaften, insbesondere bei Färbebehandlungen (Garment Dyeing) aufweist. Ferner soll die Rückvernietung insbesondere auch bei leichten (Flächengewicht 10 - 30 g/m²) und/oder offenen Trägerlagen sehr gering sein und es soll beim Aufbringen der Polyurethanbeschichtung an der Anlage zu keiner Verschmutzung kommen.

Darüber hinaus sollen die textilen Flächengebilde chemisch reinigungsbeständig sein, eine sehr gute Waschbeständigkeit bis 95 °C zeigen und auch Trocknungsbedingungen bei hohen Zyklenzahlen überstehen.

Diese Aufgabe wird erfindungsgemäß mit einem thermisch fixierbaren Flächengebilde gelöst, insbesondere verwendbar als thermisch fixierbarer Einlagestoff in der Textilindustrie, mit einer Trägerlage aus einem textilen Material, auf welcher eine Haftmassenstruktur aufgebracht ist, welche eine Polyurethanbeschichtung umfasst, die ein Polyurethangemisch enthält, welches mindestens ein Polyesterurethan (B1), mindestens ein Polyetherurethan (B2) sowie mindestens ein Polycarbonaturethan (B3) aufweist und wobei das Polyurethangemisch zumindest teilweise mit einem Vernetzer, umfassend mindestens ein Isocyanat, welches an mindestens einer Isocyanat Gruppe mit einem Blockierungsmittel blockiert ist, vernetzt worden ist.

Das Polyurethangemisch kann durch Vermischen des mindestens einem Polyesterurethan (B1) mit dem mindestens einen Polyetherurethan (B2) und dem mindestens einen Polycarbonaturethan (B3) und anschließendes zumindest teilweises Vernetzen mit einem Vernetzer umfassend ein Isocyanat, welches an mindestens einer Isocyanat Gruppe mit einem Blockierungsmittel blockiert ist, hergestellt werden.

Isocyanate im Sinne der Erfindung weisen einen substituierten oder unsubstituierten C1-C40, vorzugsweise C3-C18 Alkyl- Aryl-, oder Aralkylrest als Grundkörper auf, der eine oder mehrere Isocyanat Gruppen aufweist. Besonders bevorzugte Isocyanate sind aliphatische Polyisocyanate wie beispielsweise Hexamethylendiisocyanat (HDI). Ebenfalls geeignet sind Methylendiphenylisocyanat (MDI), Isophorondiisocyanat (IPDI), 4,4-Dicyclohexylmethandiisocyanat (H12MDI). Die Isocyanate können in einer Gleichgewichtsreaktion oligomerisiert vorliegen, beispielsweise als Dimer oder Trimer. Die oben genannten Kettenlängen beziehen sich dabei auf die Monomereinheiten.

Erfindungsgemäß besonders bevorzugt sind aliphatische Isocyanate, insbesondere Isocyanate, die einen C3-C18-Alkylrest, vorzugsweise C4-C12 Alkylrest als Grundkörper aufweisen. In praktischen Versuchen wurde nämlich gefunden, dass durch ihre Verwendung die Waschstabilität der fixierten Einlage besonders stark erhöht werden kann. Es wird vermutet, dass dies auf die Ausbildung eines stark hydrophoben interpenetrierenden Netzwerks zurückzuführen ist, dass sich aufgrund der guten Beweglichkeit des alpihatischen Rückgrats ergibt.

Das Polyesterurethan (B1) ist erhältlich durch das Umsetzen von
- mindestens einem bifunktionellen, vorzugsweise aliphatischen, cycloaliphatischen oder aromatischen Polyisocyanat (A) mit einem Isocyanatgehalt von 5 bis 65 Gew.-Anteilen, mit
- mindestens ein Polyesterpolyol (b1), sowie gegebenenfalls mit
- mindestens einem Kettenverlängerer (C).

Das Polyetherurethan (B2) ist erhältlich durch das Umsetzen von
- mindestens einem bifunktionellen, vorzugsweise aliphatischen, cycloaliphatischen oder aromatischen Polyisocyanat (A) mit einem Isocyanatgehalt von 5 bis 65 Gew.-Anteilen, mit
- mindestens ein Polyetherpolyol (b2), sowie gegebenenfalls mit
- mindestens einem Kettenverlängerer (C).

Das Polycarbonaturethan (B3) ist erhältlich durch das Umsetzen von
- mindestens einem bifunktionellen, vorzugsweise aliphatischen, cycloaliphatischen oder aromatischen Polyisocyanat (A) mit einem Isocyanatgehalt von 5 bis 65 Gew.-Anteilen, mit
- mindestens einem Polycarbonatpolyol (b3), sowie gegebenenfalls mit
- mindestens einem Kettenverlängerer (C).

Bevorzugte Ausgestaltungen der Erfindung sind in den Unteransprüchen beschrieben.

Erfindungsgemäß weist das Flächengebilde eine Polyurethanbeschichtung auf, welche ein Polyurethangemisch aus mindestens einem Polyesterurethan (B1), mindestens einem Polyetherurethan (B2) und mindestens einem Polycarbonaturethan (B3) enthält, wobei das Polyurethangemisch zumindest teilweise mit einem Vernetzer umfassend ein Isocyanat, welches an mindestens einer Isocyanat Gruppe mit einem Blockierungsmittel blockiert ist, vernetzt worden ist.

Es wurde gefunden, dass das erfindungsgemäße Flächengebilde ausgezeichnete Post-Processing Eigenschaften, insbesondere bei Färbebehandlungen (Garment Dyeing) aufweist. Ferner ist die Rückvernietung insbesondere auch bei leichten (Flächengewicht 10 - 30 g/m²) und/oder offenen Trägerlagen sehr gering und es kommt beim Aufbringen der Polyurethanbeschichtung an der Anlage zu keiner Verschmutzung.

Darüber hinaus ist das textile Flächengebilde chemisch reinigungsbeständig, zeigt eine sehr gute Waschbeständigkeit bis 95 °C, und übersteht auch Trocknungsbedingungen bei hohen Zyklenzahlen.

Ohne sich auf einen Mechanismus festzulegen wird vermutet, dass die hervorragenden Eigenschaften des Flächengebildes durch die spezielle, maßgeschneiderte Kombination von Polyesterpolyurethan (B1), Polyetherpolyurethan (B2) und Polycarbonatpolyurethan (B3) mit einem zumindest teilweise blockierten Isocyanat als Vernetzer erzielt werden können. Dabei wird vermutet, dass das aus Polyetherpolyol (b2) gebildete Polyetherpolyurethan (B2) zusammen mit dem aus Polycarbonatpolyol (b3) gebildeten Polycarbonatpolyurethan (B3) zu der hervorragenden Waschbeständigkeit des Flächengebildes führt und das aus Polyesterpolyol (b1) gebildete Polyesterpolyurethan (B1) zu dessen hervorragender Haptik und Elastizität führt.

Der Begriff "blockiertes Isocyanat" beschreibt entsprechend seiner herkömmlichen Bedeutung den Umstand, dass das Isocyanat beim in Kontakt bringen mit dem Polyurethangemisch als Additionsverbindung mit einem Blockierungsmittel, insbesondere Alkoholen (Urethane) und/oder Aminen (Harnstoffe), vorliegt. Diese Additionsverbindung kann bei höheren Temperaturen das Isocyanat wieder freisetzen, wodurch die Vernetzung des Polyurethangemischs initiiert werden kann.

Durch die Verwendung des blockierten Isocyanats kann der Zeitpunkt der Vernetzung gezielt eingestellt werden. Hierdurch kann verhindert werden, dass eine Vernetzung bereits während des Beschichtungsvorgangs auftritt, was zu Unregelmäßigkeiten in der Beschichtung führen könnte. Durch die Verwendung eines blockierten Isocyanats kann ferner ein maßgeschneiderter Vernetzungsgrad eingestellt werden, wodurch die Kohäsion im Unterpunkt und seine Haftung zum beschichteten Substrat optimiert werden kann. Dies führt zu einer verbesserten Qualität der Oberfläche des textilen Flächengebildes, und insbesondere zu einer Performancesteigerung der Trennkraft des Polyurethangemischs, die auch bei mechanisch anspruchsvollen Post-Processing Prozessen, wie dem Garment-Dying erhalten bleibt.

Weiter vorteilhaft an der Verwendung des blockierten Isocyanats als Vernetzer ist, dass durch die Modulation des Polyurethangemischs die viskoelastischen Eigenschaften des Polyurethangemischs gezielt moduliert und das Abzugsverhalten gezielt eingestellt werden kann. Darüber hinaus kann durch das blockierte Isocyanat sowohl der Griff als auch die Reinigungsbeständigkeit des textilen Flächengebildes gezielt variiert werden.

Vorzugsweise liegt das Polyurethangemisch lediglich mittels Isocyanat vernetzt vor. Denkbar ist jedoch auch, dass weitere Vernetzer, z. B. Aziridine vorliegen.

In einer bevorzugten Ausführungsform der Erfindung weist das Polyurethangemisch den Vernetzer in einer Menge von 0,1 bis 20 Gew.%, noch bevorzugter von 1 bis 10 Gew.%, insbesondere von 2 bis 6 Gew.%, jeweils bezogen auf das Gesamtgewicht an Polyurethan (B1), (B2) und (B3) auf.

In einer bevorzugten Ausführungsform der Erfindung weist das Polyurethangemisch einen Vernetzungsgrad von 0,01 bis 0,5, noch bevorzugter von 0,05 bis 0,3, insbesondere von 0,1 bis 0,2 auf. Der Vernetzungsgrad kann aus dem Verhältnis der Gesamtzahl der Isocyanatgruppen im Isocyanat zur Gesamtzahl der isocyanatreaktiven Gruppen in den Polyurethanen B1, B2 und B3 berechnet werden unter Berücksichtigung der jeweils eingesetzten Mengen.

Erfindungsgemäß bevorzugt weist das Blockierungsmittel eine Deblockierungstemperatur von unter 160 °C, beispielsweise 110-140 °C, noch bevorzugter von 120-130 °C auf.

Erfindungsgemäß besonders bevorzugte Blockierungsmittel sind ausgewählt aus der Gruppe bestehend aus 3,5-Dimethylpyrazol (DMP), Acetessigsäure, Malonester, Butanonoxim, sekundären Aminen, Caprolactam, Phenole, Alkohole und Gemische hiervon. Ganz besonders bevorzugt ist dabei DMP, da dieses zu einer hervorragenden Vernetzung der Polymere führt, nicht toxisch ist und schon bei geringen Temperaturen, um 120-130 °C deblockiert.

Das Isocyanat kann an einer oder an mehreren Isocyanat-Gruppen blockiert vorliegen.

In praktischen Versuchen wurde gefunden, dass durch die Verwendung des spezifischen Polyurethangemischs eine überraschend gute Waschbeständigkeit und hohe Elastizität des Flächengebildes erreicht werden kann. So können auch steifere Vliese verwendet werden ohne Nachteile in der haptischen Gesamtperformance zu erfahren. Des Weiteren ist es auch möglich den Flächengebilden allein durch die Polyurethanbeschichtung eine hohe Elastizität zu verleihen ohne auf Fasern (z.B. BIKO-Fasern) oder Garne mit einer hohen Elastizität zurückgreifen zu müssen. Hierdurch können neue Produkte mit spezifischen Eigenschaften hergestellt werden, wie z.B. eine elastische Bundeinlage auf Basis eines konventionellen Polyamid/Polyester-Vliesstoffes.

Ein weiterer Vorteil der Verwendung von Polyurethanen besteht darin, dass das erfindungsgemäße textile Flächengebilde einen weichen, elastischen, schönen (angenehmen) Griff aufweist. Der Griff der Einlage ist ein signifikanter und wichtiger Test in der Textilindustrie. Vorteilhaft ist insbesondere, dass der angenehme Griff ohne Silikonausrüstungen für die Basis erzielt werden kann.

Ein weiterer Vorteil der Verwendung von Polyurethanen besteht darin, dass man eine große Synthesefreiheit hat. So stehen für die Polyurethansynthese eine große Auswahl an Monomeren zur Verfügung, was eine einfache Einstellung der gewünschten physikalischen Eigenschaften wie Härte, Elastizität, etc. ermöglicht.

Als bifunktionelles Polyisocyanat (A) werden vorzugsweise C₄₋₁₈ aliphatische und/oder C₆₋₂₀ cycloaliphatische sowie C₆₋₂₀ aromatische Diisocyanate mit Isocyanatgehalten von 5 bis 65 Gew.-Anteilen eingesetzt.

So eignen sich insbesondere 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanato-dicyclohexylmethan (H₁₂MDI, HMDI), 1-Isocyanato-1-methyl-4(3)isocyanato-methylcyclohexan und Bis-(isocyanatomethyl)-norbornan und/oder deren Isomerengemische sowie Toluol-2,4-diisocyanat (TDI), 1,5-Naphthalendiisocyanat (NDI), 3,3'-Dimethyl-4,4'-biphenylendiisocyanat (TODI), 2,2'-Diphenylmethandiisocyanat (2,2'-MDI), 2,4'-Diphenylmethandiisocyanat (2,4'-MDI), 4,4'-Diphenylmethandiisocyanat (4,4'-MDI) und/oder deren Isomerengemische.

Als besonders geeignet haben sich die aliphatischen und cycloaliphatischen Diisocyanate 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (H₁₂MDI, HMDI), 1-Isocyanato-1-methyl-4(3)isocyanato-methylcyclohexan und Bis-(isocyanatomethyl)-norbornan erwiesen.

Besonders bevorzugte Polyisocyanate gemäß A sind 1,6-Diisocyanatohexan (HDI), 1-Isocyanato-3,3,5-trimethyl-5-isocyanatomethylcyclohexan (Isophorondiisocyanat, IPDI) und 4,4'-Diisocyanatodicyclohexyl-methan. Besonders bevorzugtes Polyisocyanat gemäß A ist 1,6-Diisocyanatohexan (HDI).

Besonders geeignete Polyole gemäß b sind beispielsweise Polyesterpolyole (b1), mit einem Molekulargewicht von 400 g/mol bis 6000 g/mol, noch bevorzugter von 1000 g/mol bis 4000 g/mol, Polyetherpolyole (b2) mit einem Molekulargewicht von 400 g/mol bis 6000 g/mol, und/oder Polycarbonatpolyole (b3) mit einem Molekulargewicht von 450 g/mol bis 3000 g/mol.

Unter einem Polyesterpolyol (b1) wird im Rahmen der vorliegenden Erfindung ein Polyester mit mehr als einer OH-Gruppe, bevorzugt zwei endständigen OH-Gruppen verstanden. Sie können auf bekannten Wegen hergestellt werden, beispielsweise aus aliphatischen Hydroxycarbonsäuren oder aus aliphatischen und/oder aromatischen Dicarbonsäuren und einem oder mehreren Diolen. Beispiele für geeignete Ausgangsprodukte sind Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure, Phthalsäureanhydrid, Ethylenglykol, Diethylenglykol, 1,4-Butandiol, 1,6-Hexandiol, Neopentylglykol und ε-Caprolacton.

Erfindungsgemäß bevorzugt wird als Polyesterpolyol ein gut kristallisierendes Polyesterpolyol eingesetzt. Geeignete kristallisierende Polyesterpolyole sind beispielsweise solche auf Basis linearer, vorzugsweise unvernetzter aliphatischer Dicarbonsäuren mit 6 bis 12 Kohlenstoffatomen im Molekül wie z.B. Adipinsäure und Dodecandisäure und linearen Diolen mit 4 bis 8 Kohlenstoffatomen im Molekül, vorzugsweise mit einer geraden Anzahl von Kohlenstoffatomen wie beispielsweise 1,4-Butandiol und 1,6-Hexandiol. Ebenso sind die Polycaprolactonderivate basierend auf bifunktionellen Startmolekülen wie beispielsweise 1,6-Hexandiol als besonders geeignet zu nennen.

Im Bezug auf die Polyetherpolyole (b2) und Polycarbonatpolyole (b3) liegen bevorzugte Molekulargewichte unabhängig voneinander im Bereich von 400 g/mol bis 6000 g/mol, noch bevorzugter von 1000 g/mol bis 4000 g/mol.

Geeignete Kettenverlängerer gemäß C sind zweiwertige aliphatische C₁₋₈ Alkohole beispielsweise Ethylenglykol, 1,2-Propandiol, 1,3-Propandiol, 1,3-Butandiol, 1,4-Butandiol, 2,3-Butandiol, Cyclohexandimethanol (CHDM) und 1,6-Hexandiol.

Bevorzugte Kettenverlängerer gemäß C haben eine gerade Anzahl von Kohlenstoffatomen. Hier sind 1,3-Butandiol, 1,4-Butandiol, 2,3-Butandiol und deren Isomerengemische sowie 1,6-Hexandiol zu nennen. Besonders bevorzugte Kettenverlängerer gemäß C sind 1,4-Butandiol und 1,6-Hexandiol.

Die Herstellung der Polyurethanbeschichtung kann auf einfache Weise im Batch-Prozess beispielsweise wie folgt durchgeführt werden:
Das jeweilige Polyol (b1, b2 oder b3) wird bei 90 °C unter Vakuum für einen Zeitraum von zwei Stunden entgast und entwässert. Anschließend erwärmt man das Polyol auf 100 °C und gibt unter Rühren nacheinander einen Katalysator, Additive wie beispielsweise Hydrolyse- und Alterungsschutzmittel sowie den oder die Kettenverlängerer hinzu. Zum Schluss wird unter Rühren das Polyisocyanat hinzugeben. Durch die nun stattfindende exotherme Reaktion steigt die Temperatur des Reaktionsgemischs stark an. Gleichzeitig nimmt die Viskosität des Reaktionsgemischs mit fortschreitendem Reaktionsverlauf immer weiter zu, so dass die Reaktionsmischung im Regelfall dann ausgegossen wird, wenn sich die Reaktionstemperatur nach dem anfänglich starken Anstieg auf einen annähernd konstanten Wert eingependelt hat. Die einstufige Umsetzung der Komponenten wird als *One-Shot-Verfahren* (Einstufen-Verfahren) bezeichnet.

Bei größeren Ansätzen empfiehlt sich ein kontinuierlicher Prozess über einen Reaktionsextruder.

Die wie oben dargestellten Polyurethane B1, B2 und B3 können anschließend miteinander vermengt und das zumindest teilweise blockierte Isocyanat als Vernetzer zugegeben werden. Die Deblockierung des Isocyanats erfolgt vorzugsweise direkt nach der Auftragung auf das Flächengebilde durch Erhitzen, beispielsweise auf Temperaturen von 80 °C bis 200 °C, noch bevorzugter auf Temperaturen von 100 °C bis 150 °C und insbesondere auf Temperaturen von 120 °C bis 140 °C.

In praktischen Versuchen wurde gefunden, dass es besonders zweckmäßig ist, wenn das Polyurethangemisch Polyacrylsäure und/oder Polyurethanderivate als Verdicker enthält. Es wurde gefunden, dass durch die Verwendung dieser Substanzen eine besonders gleichmäßige, blasenfreie Beschichtung erhalten werden kann.

Es ist denkbar, dass das Polyurethangemisch einen Füllstoff, insbesondere ausgewählt aus Alumosilikaten, vorzugsweise Kaolin, Calciumsilikaten, Calciumcarbonaten, Magnesiumcarbonaten, Schichtsilikaten und Aluminiumoxiden, wie z. B. Wollastonite, Dolomite, Glimmer, Barytmehle oder Talkum enthält. Die Menge des Füllstoffs beträgt in diesem Fall vorzugsweise von 0,5 bis 55 Gew.-%, noch bevorzugter von 5 bis 45 Gew.%, jeweils bezogen auf das Gesamtgewicht des Polyurethangemischs. Dabei weist der Füllstoff vorzugsweise eine mittlere Partikelgröße von 5 nm bis 100 µm auf. Durch die Modulation des Polyurethangemischs mit Füllstoffen können zudem dessen viskoelastische Eigenschaften (Rheologie), der Griff, die Reinigungsbeständigkeit, die Porengrößenverteilung, die Klebrigkeit sowie das Abzugsverhalten gezielt eingestellt werden.

In einer besonders bevorzugten Ausführungsform der Erfindung ist der Füllstoff Kieselsäure mit einer mittleren Partikelgröße von 2 bis 20 µm, noch bevorzugter von 3 bis 15 µm und insbesondere von 7 bis 10 um. Ebenfalls bevorzugt ist Kieselsäure mit einer Ölzahl, gemessen nach DIN ISO 787-5 von 30 bis 90 g/100g µm, noch bevorzugter von 50 bis 80 g/100 g und insbesondere von 60 bis 80 g/100g und/oder mit einem mittleren Porenvolumen von 0,5 bis 3 ml/g µm, noch bevorzugter von 1 bis 2 ml/g und insbesondere von 1 bis 1,5 ml/g. Besonders bevorzugt ist die Kieselsäure eine amorphe und/oder, insbesondere und, hydrophile Kieselsäure. Die Menge der Kieselsäure beträgt vorzugsweise von 0,5 bis 55 Gew.%, noch bevorzugter von 1 bis 20 Gew.% und insbesondere 2 bis 8 Gew.% jeweils bezogen auf das Gesamtgewicht des Polyurethangemischs. In dieser Ausführungsform enthält das Polyurethangemisch andere Füllstoffe, insbesondere die oben genannten anderen Füllstoffe vorzugsweise in einer Menge weniger als 10 Gew. %, noch bevorzugter weniger als 5 Gew.%, bezogen auf das Gesamtgewicht des Polyurethangemischs.

Durch die Verwendung der Kieselsäure kann die Laufeigenschaft des Polyurethangemischs verbessert werden. Hierdurch kann schneller beschichtet werden und man erhält eine erhabenere Polyurethanbeschichtung, beispielsweise als Unterpunkt, was für eine gute Anbindung des Oberpunktes und Garment Dyeing-Beständigkeit von großem Vorteil ist. Des Weiteren kann die post-processing Beständigkeit durch das homogene Einbringen des Füllstoffes weiter erhöht und der Preis erniedrigt werden. Durch die Verwendung der Kieselsäure verbessert sich ferner das rheologische Verhalten der Formulierung, was speziell bei leichten und/oder offenen Einlagen von Vorteil ist. Bei diesen Substraten besteht nämlich eine sehr hohe Gefahr, dass während des Beschichtungsvorgangs die Haftmasse zu sehr in die Einlage penetriert oder im schlimmsten Fall "durchschlägt". Dies hat zur Folge dass die Primärhaftung sinkt und/oder der Druckkopf und die darauf folgende Anlagenaggregate verschmutzt werden. Durch die Verwendung der feinteiligen Kieselsäure als Füllstoff kann diese Problematik weitestgehend eliminiert werden. Ein weiterer Vorteil der feinteiligen Kieselsäure ist deren hervorragende Dispergierbarkeit in der Polyurethanmischung als auch die gute Langzeitstabilität der Dispersion.

Das Polyurethangemisch kann des Weiteren noch Hilfsstoffe enthalten, die u.a. zur Viskositätseinstellung und zum Laufverhalten der Dispersion beitragen. Durch eine geeignete Bindemittelzusammensetzung lässt sich die Haptik des Einlagestoffes in einem weiten Rahmen variieren. In einer weiteren vorteilhaften Ausführungsform der Erfindung enthält das Polyurethangemisch ein Additiv, ausgewählt aus Aktivkohle, Ruß, Phase Change Materials (PCMs), thermoplastischem Polymer-Puder, Expancel, Flockfasern, Haftvermittler, Flammschutzmittel wie z.B. Mg- und/oder Al-hydroxide oder Phosphorverbindungen, Streichpigmenten wie z.B. Titandioxid, Superabsorbern wie z.B. Polyacrylsäure, Holzspäne, Zeolithe, Metallpulvern, magnetischen Partikeln wie z.B. Eisenoxiden, gekapselten Stoffe wie z.B. Farben, Duftstoffe oder Wirkstoffe (Wundauflage) oder geruchsabsorbierenden Stoffe wie z. B. Cyclodextrine oder PVPs, vorzugsweise in einer Menge von 0,1 bis 70 Gew.%, noch bevorzugter von 5 bis 60 Gew.% jeweils bezogen auf das Gesamtgewicht des Polyurethangemischs.

In einer weiteren bevorzugten Ausführungsform der Erfindung werden Polyurethane B1, B2 und/oder B3 mit Zugfestigkeiten von vorzugsweise 5 bis 50 MPa, noch bevorzugter von 15 bis 40 MPa, insbesondere von 20 bis 30 MPa eingesetzt.

In einer weiteren bevorzugten Ausführungsform der Erfindung werden Polyurethane B1, B2 und/oder B3 mit Shore-Härten, von vorzugsweise 30 bis 120, noch bevorzugter von 40 bis 90, insbesondere von 50 bis 70 eingesetzt.

Das Flächengewicht der Polyurethanbeschichtung kann in Abhängigkeit von den erwünschten Eigenschaften des Flächengebildes variieren. Als für die meisten Anwendungszwecke günstig hat es sich erwiesen, ein Flächengewicht im Bereich von 0,1 g/m² bis 40 g/m² , vorzugsweise von 0,5 g/m² bis 20 g/m² und insbesondere von 1 g/m² bis 10 g/m² einzustellen.

Das Polyesterurethan (B1), Polyetherurethan (B2) und Polycarbonaturethan (B3) kann im Polyurethangemisch sowohl in reiner Form als auch in Abmischungen vorliegen. So ist auch denkbar, dass das Polyurethangemisch neben den Polyurethanen noch weitere Polymere enthält. Die von dem Polyesterurethan (B1), Polyetherurethan (B2) und Polycarbonaturethan (B3) verschiedenen Polymere können beispielsweise Polyacrylate, Silikone, (Co)-Polyester-, (Co)-Polyamid-, Polyolefin-, Styrolacrylat-, Butadien-Acrylat, SBR-, NBR und Ethylenvinylacetat-basierende Polymere und/oder Kombinationen (Gemische und Copolymerisate) der genannten Polymere umfassen. Erfindungsgemäß besonders bevorzugt sind dabei die Polyacrylate und Silikone. Dabei beträgt der Anteil des Polyurethangemischs bezogen auf die Gesamtmenge der Polyurethanbeschichtung vorzugsweise 20 bis 100 Gew.-%, noch bevorzugter 30 bis 90 Gew.-% und insbesondere von 40 bis 90 Gew.-%.

Das Polyurethangemisch weist ferner vorzugsweise einen Schmelzpunkt > 190 °C auf, so dass dieses bei der Fixierung nicht zur Klebkraft beiträgt. Dies ist insbesondere dann vorteilhaft, wenn das Polyurethangemisch als Unterschicht aufgebracht ist, da diese dann gegenüber auf ihr aufgebrachte thermoplastische Schichten als Sperrschicht wirkt, was zu einem geringen Haftmassenrückschlag führt.

Des Weiteren umfasst das erfindungsgemäße Flächengebilde eine Trägerlage. Die Auswahl des für die Trägerlage einzusetzenden textilen Materials erfolgt im Hinblick auf den jeweiligen Anwendungszweck bzw. die besonderen Qualitätsanforderungen. Geeignet sind zum Beispiel Gewebe, Gewirke, Gestricke oder dergleichen. Durch die Erfindung sind hier prinzipiell keinerlei Grenzen gesetzt. Der Fachmann kann hier leicht die für seine Anwendung geeignete Materialkombination auffinden.

Der Vliesstoff, aber auch die Fäden oder Garne der textilen Materialien können aus Chemiefasern oder aber auch aus Naturfasern bestehen. Als Chemiefasern kommen vorzugsweise Polyester-, Polyamid-, Celluloseregenerat- und/oder Bindefasern zum Einsatz, als Naturfasern Wolle- oder Baumwollfasern.

Die Chemiefasern können hierbei kräuselbar, gekräuselte und/oder ungekräuselte Stapelfasern, kräuselbare, gekräuselte und/oder ungekräuselte, direkt gesponnene Endlosfasern und/oder endliche Fasern, wie Meltblown-Fasern, umfassen. Die Trägerlage kann ein- oder mehrlagig aufgebaut sein.

Für die Herstellung des Vliesstoffs können die eingangs dargestellten Technologien eingesetzt werden. Das Verbinden der Fasern des Faserflors zu einem Vliesstoff kann hierbei mechanisch (konventionelles Vernadeln, Wasserstrahltechnik), mittels eines Bindemittels oder thermisch erfolgen. Hierbei reicht allerdings eine moderate Vliesstofffestigkeit der Trägerlage vor dem Bedrucken aus, da die Trägerlage beim Bedrucken mit dem Gemisch aus Bindemittel und thermoplastischem Polymer noch zusätzlich mit Bindemittel beaufschlagt und verfestigt wird. Für die moderaten Vliesstofffestigkeiten können auch kostengünstige Faserrohstoffe eingesetzt werden, vorausgesetzt, dass diese die Anforderungen an den Griff erfüllen. Auch kann die Prozessführung vereinfacht werden.

Im Falle der Verwendung von Stapelfasern ist es vorteilhaft, diese mit mindestens einer Krempel zu einem Faserflor zu kardieren. Bevorzugt ist hier eine Wirrlegung (Random-Technologie), doch auch Kombinationen aus Längs- und/oder Querlegung bzw. noch kompliziertere Krempelanordnungen sind möglich, wenn spezielle Vliesstoffeigenschaften ermöglicht werden sollen bzw. wenn mehrlagige Faserstrukturen gewünscht werden.

Besonders geeignet für Einlagestoffe sind Fasern mit einem Fasertiter bis 6,7 dtex. Gröbere Titer werden aufgrund ihrer großen Fasersteifigkeit normalerweise nicht eingesetzt. Bevorzugt sind Fasertiter im Bereich von 1,7 dtex, doch auch Mikrofasern mit einem Titer < 1 dtex sind denkbar.

In einer besonders bevorzugten Ausführungsform der Erfindung weist die Trägerlage ein Flächengewicht von 5 bis 300 g/m², noch bevorzugter von 10 bis 100 g/m², noch bevorzugter von 10 bis 40 g/m², und insbesondere von 10 bis 30 g/m² auf.

Auf dem Polyurethangemisch kann ein Schmelzklebstoff aufgebracht sein. Gemäß einer bevorzugten Ausführungsform der Erfindung ist die Polyurethanbeschichtung mithin als Unterschicht in einer zweilagigen Haftmassenstruktur, umfassend eine unmittelbar auf dem Flächengebilde aufliegende und das Polyurethangemisch umfassende Unterschicht sowie eine auf der Unterschicht angeordnete Schmelzklebstoffoberschicht ausgebildet.

Schmelzklebstoffe, auch Heißklebestoffe, Heißkleber oder im Englischen Hotmelts genannt, sind seit langem bekannt. Allgemein versteht man unter ihnen im Wesentlichen lösungsmittelfreie Produkte, die im geschmolzenen Zustand auf eine Klebefläche aufgetragen werden, rasch beim Abkühlen erstarren und damit schnell Festigkeit aufbauen. Erfindungsgemäß bevorzugt werden thermoplastische Polymere, wie Polyamide (PA), Polyester (PES), Ethylvinylacetat (EVA) und dessen Copolymere (EVAC), Polyethylen (PE), Polypropylen (PP), amorphe Polyalphaolefine (APAO), Polyurethane (PU) etc. als Schmelzklebstoffe verwendet. Erfindungsgemäß besonders bevorzugt sind Polyamide, da sie eine hohe Waschbeständigkeit, von insbesondere mindestens 95 °C und Garment-Dyeing Beständigkeit aufweisen können.

Die Klebewirkung der Schmelzklebstoffe basiert grundsätzlich darauf, dass sie sich als thermoplastische Polymere reversibel aufschmelzen lassen und als flüssige Schmelze aufgrund ihrer durch den Schmelzvorgang erniedrigten Viskosität in der Lage sind, die zu klebende Fläche zu benetzen und dadurch eine Adhäsion zu ihr auszubilden. Als Folge der anschließenden Abkühlung erstarrt der Schmelzklebstoff wieder zum Festkörper, der eine hohe Kohäsion besitzt und auf diese Weise die Verbindung zur Klebefläche herstellt. Nachdem die Klebung stattgefunden hat, sorgen die viskoelastischen Polymere dafür, dass die Adhäsion auch nach dem Abkühlvorgang mit ihren Volumenänderungen und dem damit verbundenen Aufbau mechanischer Spannungen erhalten bleibt. Die aufgebaute Kohäsion vermittelt die Bindekräfte zwischen den Substraten.

Vorteilhafterweise werden die Schmelzklebstoffe in Pulverform eingesetzt. Die Größe der Partikel orientiert sich an der zu bedruckenden Fläche, beispielsweise der gewünschten Größe eines Bindungspunktes. Im Falle eines Punktmusters kann der Partikeldurchmesser zwischen >0 µm und 500 µm variieren. Grundsätzlich ist die Partikelgröße des Schmelzklebstoffs nicht einheitlich, sondern folgt einer Verteilung, d.h. man hat immer ein Partikelgrößenspektrum vorliegen. Zweckmäßigerweise ist die Partikelgröße abgestimmt auf die gewünschte Auftragsmenge, Punktgröße und Punktverteilung.

Schmelzklebstoffe in Pulverform können mittels Streuauftrag aufgebracht werden, was insbesondere zum Kleben poröser Substrate für die Herstellung insgesamt atmungsaktiver Textilverbunde zweckmäßig ist. Vorteilhaft am Streuauftrag ist ferner, dass es eine einfache Auftragsmethode für Anwendungen in großem Maßstab ist. Da thermoaktivierte Pulver, beispielsweise aus Polyamiden, Polyestern oder Polyurethanen, bereits bei niedrigen Temperaturen klebfähig sind, eignen sie sich zur schonenden Laminierung wärmeempfindlicher Substrate, z.B. hochwertiger Textilien. Dank guter Fließeigenschaften im aktivierten Zustand wird selbst bei niedrigem Druck und kurzer Anpresszeit eine gute Verbindung hergestellt; dennoch bleibt das Risiko des Durchschlagens in das Gewebe gering.

Im Falle einer flächigen Polyurethanbeschichtung stellt das Polyurethangemisch die Unterschicht einer zweilagigen Haftmassenstruktur dar, auf der eine Schmelzklebstoffoberschicht angeordnet ist. Dabei kann die Schmelzkleberoberschicht in Form eines Punktmusters oder flächig ausgebildet sein.

In einer bevorzugten Ausführungsform der Erfindung ist die zweilagige Haftmassenstruktur eine solche, in der Polyurethangemisch und Schmelzklebstoff als Doppelpunkte ausgebildet sind, wobei das Polyurethangemisch als Unterpunktmuster und der Schmelzklebstoff als Oberpunktmuster ausgestaltet ist. Dabei können die Doppelpunkte in einem regelmäßigen oder unregelmäßigen Muster auf der Trägerlage verteilt sein.

Erfindungsgemäß sollen unter zweilagigen Haftmassenstrukturen sowohl die oben beschriebene flächige zweilagige Haftmassenstruktur als auch Doppelpunkte verstanden werden. Dementsprechend soll der Begriff Unterschicht sowohl flächige Unterschichten als auch Unterpunkte und der Begriff Oberschicht sowohl flächige Oberschichten als auch Oberpunkte umfassen.

Der Doppelpunkt auf der Basis eines Polyurethangemischs als Unterpunkt und einem Streupuder als Oberpunkt wird vorzugsweise in einem Punktmuster auf die Trägerlage aufgebracht. Damit werden die Weichheit und die Sprungelastizität des Materials verstärkt. Das Punktmuster kann regulär oder irregulär verteilt sein. Die Bedruckung ist aber keinesfalls auf Punktmuster beschränkt. Der Doppelpunkt kann in beliebigen Geometrien aufgebracht werden, z.B. auch in Form von Linien, Streifen, netz- oder gitterartigen Strukturen, Punkten mit rechteckiger, rautenförmiger oder ovaler Geometrie oder dergleichen.

Die zweilagigen Haftmassenstrukturen zeichnen sich durch einen geringen Haftmassenrückschlag aus, da das zuerst aufgebrachte Polyurethangemisch als Sperrschicht wirken kann.

Die Auftragung der Ober- und Unterschicht kann vorteilhaft in Form der klassischen Doppelpunktbeschichtung erfolgen. Zur Bildung des Unterpunkts können die Polyurethangemische in Form von Polyurethandispersionen eingesetzt werden. Diese können einen Schmelzpunkt > 190 °C aufweisen und somit bei der Fixierung nicht zur Verklebung mit beitragen. Vorteilhaft an einem solchen Unterpunkt ist, dass er auf einfache Weise beispielsweise weich, klebfrei, elastisch, filmbildend, verträglich mit weiteren Additiven, lichtecht (vergilbungsfrei) ausgebildet werden kann. Durch die Verwendung des Vernetzers im Polyurethangemisch kann des Weiteren die Anbindung zum Oberpunkt, zur Trägerlage sowie innerhalb des Polymermatrix stark verbessert und dadurch die Trennkraft des Haftmassensystems gesteigert werden. Ein vernetzter Polyurethanunterpunkt bietet mithin den Vorteil, dass die Rückvernietung dadurch erheblich reduziert werden kann.

Für den Einlagebereich ist es vorteilhaft, wenn zur Herstellung der Oberschicht ein Granulat (generell 80-200 µm) verwendet wird, das eine gute Vermahlbarkeit aufweist.

Ebenfalls denkbar ist, dass zwischen Oberschicht und Polyurethangemisch - Unterschicht keine klare Phasengrenze zu erkennen ist. Dies kann beispielsweise dadurch bewirkt werden, dass das Polyurethangemisch im Gemisch mit einem partikulären thermoplastischen Material beispielsweise in Form einer Dispersion, und ggf. noch weiteren Komponenten aufgetragen wird.

Nach dem Auftragen wird das partikuläre thermoplastische Material im Polyurethangemisch separiert, wobei die gröberen Partikel mehr auf der Oberseite der Bindungsfläche, beispielsweise der Punktoberfläche, zum Liegen kommen. Die gröberen Polymerpartikel in der Polyurethanmatrix sind zwar eingebunden, gleichzeitig steht ihre freie (Ober-)Fläche an der Oberfläche des Vliesstoffs aber zur direkten Verklebung mit dem Oberstoff zur Verfügung. Es kommt zur Ausbildung einer doppelpunktähnlichen Struktur, wobei zur Erzeugung dieser Struktur im Gegensatz zum bekannten Doppelpunktverfahren aber nur ein einziger Verfahrensschritt erforderlich ist und auch das aufwändige Absaugen überschüssigen Pulvers entfällt. Die Einlagen erhalten auf diese Weise eine höhere Elastizität und ein höheres Rücksprungvermögen als diejenigen mit herkömmlichen Polymeren auf Polyamid- oder Polyesterbasis.

Der Doppelpunkt auf der Basis einer, vorzugsweise wässrigen, Dispersion als Unterpunkt und einem Streupuder als Oberpunkt, wird vorzugsweise, wie oben beschrieben, in einem Punktmuster auf die Trägerlage aufgebracht. Damit wird die Weichheit und die Sprungelastizität des Materials verstärkt. Das Punktmuster kann regulär oder irregulär verteilt sein. Die Bedruckung ist aber keinesfalls auf Punktmuster beschränkt. Der Doppelpunkt oder die Paste können in beliebigen Geometrien aufgebracht werden, z.B. auch in Form von Linien, Streifen, netz- oder gitterartigen Strukturen, Punkten mit rechteckiger, rautenförmiger oder ovaler Geometrie oder dergleichen.

Ein bevorzugtes Verfahren zur Herstellung eines thermisch fixierbaren Flächengebildes, umfasst die folgenden Maßnahmen:
a) Bereitstellen einer Trägerlage,
b) Herstellen eines Polyurethangemischs, umfassend mindestens ein Polyesterurethan (B1), mindestens ein Polyetherurethan (B2) und mindestens ein Polycarbonaturethan (B3) sowie mindestens ein Isocyanat, welches an mindestens einer Isocyanat Gruppe mit einem Blockierungsmittel blockiert ist, als Vernetzer,
b) Auftragen des Polyurethangemischs unter Ausbildung einer Haftmassenstruktur, auf ausgewählte Flächenbereiche der Trägerlage und
c) Temperaturbehandlung der aus Schritt b) erhaltenen Trägerlage zum zumindest teilweisen Vernetzen des Polyurethangemischs und gleichzeitig zur Anbindung des Polyurethangemischs auf der/mit der Oberfläche der Trägerlage.

Mit dem erfindungsgemäßen Verfahren kann das erfindungsgemäße Flächen gebildet gemäß einer oder mehrerer der hier beschriebenen Ausführungsformen auf einfache Weise hergestellt werden.

Ein weiterer Gegenstand der Erfindung ist ein thermisch fixierbares Flächengebilde, das mit dem vorangehend beschriebenen Verfahren herstellbar ist.

Vorzugsweise wird die Haftmassenstruktur als zweischichtige Haftmassenstruktur, wie oben erläutert, mit Unter- und Oberschicht gebildet. Zur Bildung der Unterschicht kann auf dem Flächengebilde zunächst das Polyurethangemisch, vorzugsweise in Form einer wässrigen Dispersion aufgebracht werden. Auf diese kann anschließend ein Schmelzklebstoff, insbesondere ein thermoplastisches Material, vorzugsweise in Form eines Streupuders, aufgebracht werden.

Die Trägerlage aus einem textilen Material bzw. aus Vliesstoff kann direkt in einer Druckmaschine mit dem Polyurethangemisch, bedruckt werden. Dazu kann es eventuell sinnvoll sein, das Polyurethangemisch vor dem Druckvorgang mit textilen Hilfsmitteln wie Verdickern (beispielsweise partiell vernetzte Polyacrylate und deren Salze), Dispergatoren, Netzmitteln, Laufhilfsmitteln, Griffmodifikatoren zu versehen oder auf beliebige andere Art so zu behandeln, dass der Druckprozess produktionssicherer wird.

In einer bevorzugten Ausführungsform der Erfindung erfolgt die Temperaturbehandlung bei Temperaturen von 80 °C bis 200 °C, noch bevorzugter auf Temperaturen von 100 °C bis 150 °C und insbesondere auf Temperaturen von 120 °C bis 140 °C.

In einer weiteren bevorzugten Ausführungsform der Erfindung umfasst das Verfahren mindestens eine Färbebehandlung, insbesondere "Garment Dyeing" des Flächengebildes. Dabei findet die Färbebehandlung zweckmäßigerweise nach der Fixierung der Einlage auf den Oberstoff statt.

Ein weiterer Gegenstand der Erfindung ist die Verwendung des erfindungsgemäßen Flächengebildes als Einlagestoff zur Fixierung an einem Oberstoff, vorzugsweise mit einer Luftdurchläßigkeit < 100 dm³/s*m² bei einem Prüfdruck von 200 Pa gemessen gemäß EN ISO 9237.

Der Einsatz eines erfindungsgemäßen thermisch fixierbaren Flächengebildes ist jedoch nicht auf diese Anwendung beschränkt. Auch andere Anwendungen sind denkbar, beispielsweise als fixierbare textile Flächengebilde bei Heimtextilien wie Polstermöbeln, verstärkten Sitzkonstruktionen, Sitzbezügen oder als fixierbares und dehnfähiges textiles Flächengebilde in der Automobilausstattung, bei Schuhkomponenten oder im Bereich Hygiene/Medikal.

Nachfolgend wird die Erfindung ohne Beschränkung der Allgemeinheit am Beispiel der Verwendung eines erfindungsgemäßen thermisch fixierbaren Flächengebildes als fixierbarer Einlagestoff in der Textilindustrie beschrieben.

### Beispiel 1

Eine Gewirkebasis (100 % Polyamid) mit 15 g/m² Flächengewicht wird nach dem bekannten Doppelpunktverfahren beschichtet. Hierbei wird ein acrylatbasierter Unterpunkt, ein Polyesterpolyurethanbinderunterpunkt (ohne Füllstoffe, ohne Vernetzer) aus dem Stand der Technik und der erfindungsgemäße Polyurethanbinderunterpunkt, der ein blockiertes Isocyanat und feinteilige, amorphe und hydrophile Kieselsäure enthält, eingesetzt. Die jeweiligen Unterpunkte werden mit einem waschbeständigen Polyamidpuder betreut. Dabei werden für die Unterpunkte Bindemittel eingesetzt, die mit den üblichen Hilfsstoffen, wie Emulgatoren, Verdickern und Prozeßhilfsmitteln angesetzt waren. Das als Oberpunkt eingesetzte Polyamid hat einen Schmelzpunkt von 118 °C und einem MFI-Wert von 30 (g/10 min) (ermittelt bei 160 °C unter einer Belastung von 2,16 kg).

Die Zusammensetzung des erfindungsgemäßen Binderunterpunkts ist in der nachfolgenden Tab. 1 dargestellt.

**Tabelle 1**

| | |
|---|---|
| | **Gew [%] auf Gesamtgewicht des Polyurethangemischs** |
| | |
| **PU-Dispersion 1** *(Gemisch aus Polycarbonaturethan, Polyesterurethan und Polyetherurethan)* | **65,0** |
| **PU-Dispersion 2** *(Polycarbonaturethan)* | **19,0** |
| **Blockiertes aliphatisches Isocyanat** | **3,0** |
| **Kieselsäure** | **3,0** |
| **Additive** | **9,0** |

Im Beschichtungsprozess werden jeweils 5 g Unterpunktbinderpaste aufgetragen und mit 8 g Streupuder belegt. Die hierbei erhaltenen beschichteten Einlagen werden bei einer Temperatur von 120 °C, für 12 sec. und einem Druck von 2,5 bar fixiert (Presse: Kannegiesser EXT 1000 CU). Zur Ermittlung der Primärtrennkraft und Waschstabilität dient ein PES/BW Oberstoff. Zur Ermittlung der Garment Dyeing Ergebnisse wird ein Baumwoll Oberstoff eingesetzt. Hier wird bei 140°C fixiert mit 15 sec. und 2,5 bar.

Die Ergebnisse sind in der folgenden Tabellen 2 und 3 dargestellt:

**Tabelle 2:**

| Binder | Primär-TK [N/5cm] | 3x95°C Wäsche [N/5cm] | RV [N/10cm] |
|---|---|---|---|
| Acrylat | 18,2 | 1,3 | 1,1 |
| PU Vergleich | 31,2 | 15,7 | 2,1 |
| PU erfindungsgemäß | 34,1 | 22,2 | 1,8 |

**Tabelle 3:**

| Binder | Primär-TK [N/5cm] | GD [N/5cm] | Oberfläche nach GD |
|---|---|---|---|
| Acrylat | 14,2 | 0 | Vollständige Ablösung |
| PU Vergleich | 29,6 | 5,5 | Partielle Ablösung (Maulwurfgänge), unruhige Oberfläche |
| PU erfindungsgemäß | 28,1 | 8,2 | Glatte Oberfläche, vollständige Verklebung |

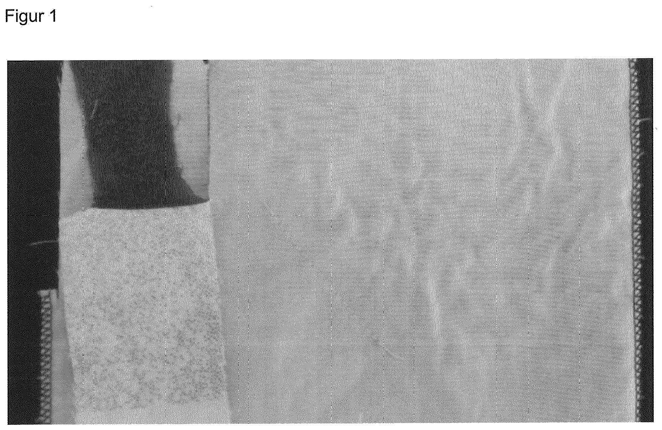

In Figur 1 ist die Oberfläche des mit dem nicht erfindungsgemäßen Polyurethanbinderunterpunkt beschichteten Gewirkes dargestellt. Man erkennt eine sehr unruhige Oberfläche mit Maulwurfgängen (partielles Ablösen der Einlage, Note 4). Fast die gesamte Doppelpunktbeschichtung überträgt sich auf den Oberstoff, d.h. der Unterpunkt nach Garment Dyeing-Behandlung löst sich aus der Basis.

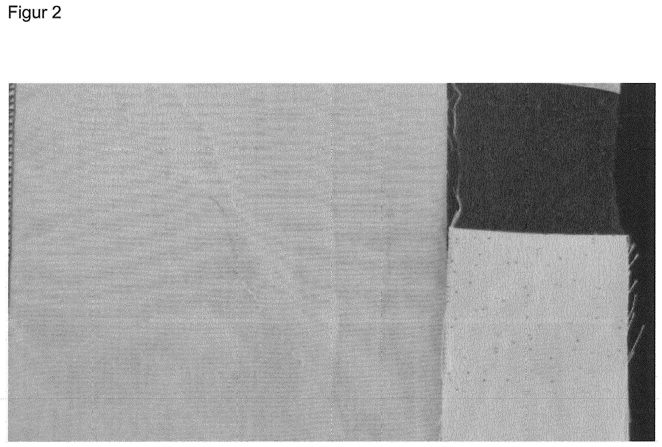

In Figur 2 ist die Oberfläche des mit dem erfindungsgemäßen Polyurethanbinderunterpunkt beschichteten Gewirkes dargestellt. Man erkennt eine sehr glatte, ruhige Oberfläche ohne Maulwurfgänge. Die komplette Fläche ist fixiert (Note 1). Ein Großteil des Doppelpunktes und damit des Unterpunktes bleibt nach Garment Dyeing Behandlung in der Basis verankert. Es findet ein nur geringer Übertrag von Oberpunktpolymer in den Oberstoff statt.

## Patentansprüche

1. Thermisch fixierbares Flächengebilde, insbesondere verwendbar als fixierbarer Einlagestoff in der Textilindustrie, mit einer Trägerlage aus einem textilen Material, auf welcher eine Haftmassenstruktur aufgebracht ist, welche eine Polyurethanbeschichtung umfasst, die ein Polyurethangemisch enthält, welches mindestens ein Polyesterurethan (B1), mindestens ein Polyetherurethan (B2) sowie mindestens ein Polycarbonaturethan (B3) aufweist und wobei das Polyurethangemisch zumindest teilweise mit einem Vernetzer, umfassend mindestens ein Isocyanat, welches an mindestens einer Isocyanat Gruppe mit einem Blockierungsmittel blockiert ist, vernetzt worden ist.

2. Thermisch fixierbares Flächengebilde nach Anspruch 1, **dadurch gekennzeichnet, dass** das Polyurethangemisch durch Vermischen des mindestens einem Polyesterurethan (B1) mit dem mindestens einen Polyetherurethan (B2) und dem mindestens einen Polycarbonaturethan (B3) und anschließendes zumindest teilweises Vernetzen mit einem Vernetzer umfassend ein Isocyanat, welches an mindestens einer Isocyanat Gruppe mit einem Blockierungsmittel blockiert ist, hergestellt worden ist.

3. Thermisch fixierbares Flächengebilde nach Anspruch 1 oder 2, **dadurch gekennzeichnet, dass** das Blockierungsmittel eine Deblockierungstemperatur von unter 160 °C, beispielsweise 110-140 °C, noch bevorzugter von 120-130 °C aufweist.

4. Thermisch fixierbares Flächengebilde nach einem oder mehreren der vorangehenden Ansprüche, **dadurch gekennzeichnet, dass** das Blockierungsmittel 3,5-Dimethylpyrazol (DMP) ist.

5. Thermisch fixierbares Flächengebilde nach einem oder mehreren der vorangehenden Ansprüche, **dadurch gekennzeichnet, dass** das Polyurethangemisch den Vernetzer in einer Menge von 0,1 bis 20 Gew.%, noch bevorzugter von 1 bis 10 Gew.%, insbesondere von 2 bis 6 Gew.%, jeweils bezogen auf das Gesamtgewicht an Polyurethan (B1), (B2) und (B3) aufweist.

6. Thermisch fixierbares Flächengebilde nach einem oder mehreren der vorangehenden Ansprüche, **dadurch gekennzeichnet, dass** das Polyurethangemisch mindestens ein Isocyanat, das einen C3-C18-Alkylrest, vorzugsweise C4-C12 Alkylrest als Grundkörper aufweist, enthält.

7. Thermisch fixierbares Flächengebilde nach einem oder mehreren der vorangehenden Ansprüche, **dadurch gekennzeichnet, dass** das Polyurethangemisch einen Vernetzungsgrad von 0,01 bis 0,5, noch bevorzugter von 0,03 bis 0,3, insbesondere von 0,1 bis 0,2 aufweist.

8. Thermisch fixierbares Flächengebilde nach einem oder mehreren der vorangehenden Ansprüche, **dadurch gekennzeichnet, dass** das Polyurethangemisch Kieselsäure mit einer mittleren Partikelgröße von 2 bis 20 µm, noch bevorzugter von 3 bis 15 µm und insbesondere von 7 bis 10 um als Füllstoff aufweist.

9. Thermisch fixierbares Flächengebilde nach einem oder mehreren der vorangehenden Ansprüche, **dadurch gekennzeichnet, dass** die Menge der Kieselsäure im Polyurethangemisch von 0,5 bis 55 Gew.%, noch bevorzugter von 1 bis 20 Gew.% und insbesondere 2 bis 8 Gew.% jeweils bezogen auf das Gesamtgewicht des Polyurethangemischs beträgt.

10. Thermisch fixierbares Flächengebilde nach einem oder mehreren der vorangehenden Ansprüche, **dadurch gekennzeichnet, dass** die Trägerlage ein Flächengewicht von 10 bis 40 g/m², noch bevorzugter von 10 bis 30 g/m² aufweist.

11. Thermisch fixierbares Flächengebilde nach einem oder mehreren der vorangehenden Ansprüche, **dadurch gekennzeichnet, dass** die Haftmassenstruktur als zweilagigen Haftmassenstruktur ausgebildet ist, umfassend eine unmittelbar auf dem Flächengebilde aufliegende und das Polyurethangemisch umfassende Unterschicht sowie eine auf der Unterschicht angeordnete und Schmelzklebstoff umfassende Oberschicht.

12. Thermisch fixierbares Flächengebilde nach Anspruch 11, **dadurch gekennzeichnet, dass** Polyurethangemisch und Schmelzklebstoff als Doppelpunkte ausgebildet sind, wobei das Polyurethangemisch als Unterpunktmuster und der Schmelzklebstoff als Oberpunktmuster ausgestaltet ist.

13. Verfahren zur Herstellung eines thermisch fixierbaren Flächengebildes, umfassend die folgenden Maßnahmen:
a. Bereitstellen einer Trägerlage,
b. Herstellen eines Polyurethangemischs, umfassend mindestens ein Polyesterurethan (B1), mindestens ein Polyetherurethan (B2) und mindestens ein Polycarbonaturethan (B3) sowie mindestens ein Isocyanat, welches an mindestens einer Isocyanat Gruppe mit einem Blockierungsmittel blockiert ist, als Vernetzer,
c. Auftragen des Polyurethangemischs unter Ausbildung einer Haftmassenstruktur, auf ausgewählte Flächenbereiche der Trägerlage und
d. Temperaturbehandlung der aus Schritt b) erhaltenen Trägerlage zum zumindest teilweisen Vernetzen des Polyurethangemischs und gleichzeitig zur Anbindung des Polyurethangemischs auf der/mit der Oberfläche der Trägerlage.

14. Verfahren nach Anspruch 13, **dadurch gekennzeichnet, dass** die Temperaturbehandlung bei Temperaturen von 80 °C bis 200 °C, noch bevorzugter von 100 °C bis 150 °C und insbesondere von 120 °C bis 140 °C erfolgt.

15. Thermisch fixierbares Flächengebilde, hergestellt mit einem Verfahren nach Anspruch 13 oder 14.

16. Verwendung eines Flächengebildes nach einem oder mehreren der vorangehenden Ansprüche als Einlagestoff zur Fixierung an einem Oberstoff, insbesondere einem Oberstoff mit einer Luftdurchlässigkeit von Luftdurchläßigkeit < 100 dm³/s*m² bei einem Prüfdruck von 200 Pa gemessen in Anlehnung an EN ISO 9237

## Claims

1. Thermo-fusible sheet body, usable in particular as a fusible interlining in the textile industry, having a backing ply composed of a textile material and bearing an applied bonding compound structure which comprises a polyurethane coating comprising a polyurethane mixture including at least one polyester urethane (B1), at least one polyetherurethane (B2) and also at least one polycarbonateurethane (B3), the polyurethane mixture having been crosslinked at least partially with a crosslinker comprising at least one isocyanate blocked on at least one isocyanate group with a blocking agent.

2. Thermo-fusible sheet body according to Claim 1, **characterized in that** the polyurethane mixture has been prepared by mixing the at least one polyesterurethane (B1) with the at least one polyetherurethane (B2) and the at least one polycarbonateurethane (B3) and subsequently at least partially crosslinking the mixture with a crosslinker comprising an isocyanate blocked on at least one isocyanate group with a blocking agent.

3. Thermo-fusible sheet body according to Claim 1 or 2, **characterized in that** the blocking agent has a deblocking temperature of below 160°C, 110-140°C for example, more preferably still of 120-130°C.

4. Thermo-fusible sheet body according to one or more of the preceding claims, **characterized in that** the blocking agent is 3,5-dimethylpyrazole (DMP).

5. Thermo-fusible sheet body according to one or more of the preceding claims, **characterized in that** the polyurethane mixture includes the crosslinker in an amount of 0.1 to 20 wt%, more preferably still of 1 to 10 wt%, more particularly of 2 to 6 wt%, based in each case on the total weight of polyurethane (B1), (B2) and (B3) .

6. Thermo-fusible sheet body according to one or more of the preceding claims, **characterized in that** the polyurethane mixture comprises at least one isocyanate which has a C3-C18 alkyl radical, preferably C4-C12 alkyl radical, as its basic structure.

7. Thermo-fusible sheet body according to one or more of the preceding claims, **characterized in that** the polyurethane mixture has a degree of crosslinking of 0.01 to 0.5, more preferably still of 0.03 to 0.3, more particularly of 0.1 to 0.2.

8. Thermo-fusible sheet body according to one or more of the preceding claims, **characterized in that** the polyurethane mixture includes silica having a mean particle size of 2 to 20 pm, more preferably still of 3 to 15 µm and more particularly of 7 to 10 um as filler.

9. Thermo-fusible sheet body according to one or more of the preceding claims, **characterized in that** the amount of the silica in the polyurethane mixture is from 0.5 to 55 wt%, more preferably still from 1 to 20 wt% and more particularly 2 to 8 wt%, based in each case on the total weight of the polyurethane mixture.

10. Thermo-fusible sheet body according to one or more of the preceding claims, **characterized in that** the backing ply has a basis weight of 10 to 40 g/m², more preferably still of 10 to 30 g/m².

11. Thermo-fusible sheet body according to one or more of the preceding claims, **characterized in that** the bonding compound structure is constructed as a two-ply bonding compound structure, comprising an underlayer, lying directly on the sheet body and comprising the polyurethane mixture, and an overlayer, arranged on the underlayer and comprising hotmelt adhesive.

12. Thermo-fusible sheet body according to Claim 11, **characterized in that** polyurethane mixture and hotmelt adhesive are constructed as double points, with the polyurethane mixture being configured as underpoint pattern and the hotmelt adhesive as overpoint pattern.

13. Method for producing a thermo-fusible sheet body, comprising the following measures:
a. providing a backing ply,
b. preparing a polyurethane mixture comprising at least one polyesterurethane (B1), at least one polyetherurethane (B2) and at least one polycarbonateurethane (B3) and also at least one isocyanate blocked on at least one isocyanate group with a blocking agent, as crosslinker,
c. applying the polyurethane mixture to form a bonding compound structure to selected surface regions of the backing ply, and
d. temperature-treating the backing ply obtained from step b) to at least partially crosslink the polyurethane mixture and at the same time to attach the polyurethane mixture on the/to the surface of the backing ply.

14. Method according to Claim 13, **characterized in that** the temperature treatment takes place at temperatures of 80°C to 200°C, more preferably still of 100°C to 150°C and more particularly of 120°C to 140°C.

15. Thermo-fusible sheet body produced by a method according to Claim 13 or 14.

16. Use of a sheet body according to one or more of the preceding claims as an interlining for fusion on a top fabric, more particularly a top fabric having an air permeability of air permeability < 100 dm³/s*m² at a test pressure of 200 Pa measured in accordance with EN ISO 9237.

## Revendications

1. Étoffe thermofixable, utilisable en particulier comme triplure fixable dans l'industrie textile, comportant une couche support en un matériau textile sur lequel est appliquée une structure de masse adhésive qui comprend un revêtement de polyuréthane qui contient un mélange de polyuréthanes, lequel comprend au moins polyesteruréthane (B1), au moins un polyétheruréthane (B2) ainsi qu'au moins un polycarbonate-uréthane (B3), et le mélange de polyuréthanes ayant été au moins partiellement réticulé avec un agent de réticulation comprenant au moins un isocyanate, lequel est bloqué, au niveau d'au moins un groupe isocyanate, par un agent bloquant.

2. Étoffe thermofixable selon la revendication 1, **caractérisée en ce que** le mélange de polyuréthanes a été fabriqué par mélange de l'au moins un polyesteruréthane (B1) avec l'au moins un polyétheruréthane (B2) et l'au moins un polycarbonate-uréthane (B3), puis par réticulation au moins partielle avec un agent de réticulation comprenant un isocyanate, lequel est bloqué, au niveau d'au moins un groupe isocyanate, par un agent bloquant.

3. Étoffe thermofixable selon la revendication 1 ou 2, **caractérisée en ce que** l'agent bloquant présente une température de déblocage inférieure à 160 °C, par exemple de 110 à 140 °C, plus préférentiellement de 120 à 130 °C.

4. Étoffe thermofixable selon l'une ou plusieurs des revendications précédentes, **caractérisée en ce que** l'agent bloquant est le 3,5-diméthylpyrazole (DMP).

5. Étoffe thermofixable selon l'une ou plusieurs des revendications précédentes, **caractérisée en ce que** le mélange de polyuréthanes comprend l'agent de réticulation en une quantité de 0,1 à 20 % en poids, plus préférentiellement de 1 à 10 % en poids, en particulier de 2 à 6 % en poids, dans chaque cas par rapport au poids total des polyuréthanes (B1), (B2) et (B3).

6. Étoffe thermofixable selon l'une ou plusieurs des revendications précédentes, **caractérisée en ce que** le mélange de polyuréthanes contient au moins un isocyanate qui comprend un radical alkyle en C3-C18, de préférence un radical alkyle en C4-C12 en tant que corps de base.

7. Étoffe thermofixable selon l'une ou plusieurs des revendications précédentes, **caractérisée en ce que** le mélange de polyuréthanes présente un degré de réticulation de 0,01 à 0,5, plus préférentiellement de 0,03 à 0,3, en particulier de 0,1 à 0,2.

8. Étoffe thermofixable selon l'une ou plusieurs des revendications précédentes, **caractérisée en ce que** le mélange de polyuréthanes comprend de la silice, ayant une granulométrie moyenne de 2 à 20 µm, plus préférentiellement de 3 à 15 µm et en particulier de 7 à 10 um en tant que matière de charge.

9. Étoffe thermofixable selon l'une ou plusieurs des revendications précédentes, **caractérisée en ce que** la quantité de la silice dans le mélange de polyuréthanes est de 0,5 à 55 % en poids, plus préférentiellement de 1 à 20 % en poids et en particulier de 2 à 8 % en poids, dans chaque cas par rapport au poids total du mélange de polyuréthanes.

10. Étoffe thermofixable selon l'une ou plusieurs des revendications précédentes, **caractérisée en ce que** la couche support présente une masse surfacique de 10 à 40 g/m², plus préférentiellement de 10 à 30 g/m².

11. Étoffe thermofixable selon l'une ou plusieurs des revendications précédentes, **caractérisée en ce que** la structure de masse adhésive est conçue comme une structure de masse adhésive bicouche, comprenant une couche inférieure, disposée directement sur l'étoffe et comprenant le mélange de polyuréthanes, ainsi qu'une couche supérieure disposée sur la couche inférieure et comprenant un adhésif fusible.

12. Étoffe thermofixable selon la revendication 11, **caractérisée en ce que** le mélange de polyuréthanes et l'adhésif fusible sont conçus comme des doubles points, le mélange de polyuréthanes étant réalisé sous forme d'un mélange de points inférieurs et l'adhésif fusible sous forme d'un modèle de points supérieurs.

13. Procédé de fabrication d'une étoffe thermofixable, comprenant les mesures suivantes :
a. fourniture d'une couche support,
b. fabrication d'un mélange de polyuréthanes comprenant au moins un polyesteruréthane (B1), au moins un polyétheruréthane (B2) et au moins un polycarbonate-uréthane (B3), ainsi qu'au moins un isocyanate, lequel est bloqué, au niveau d'au moins un groupe isocyanate, par un agent bloquant, en tant qu'agent de réticulation,
c. application du mélange de polyuréthanes avec formation d'une structure de masse adhésive, sur des zones superficielles sélectionnées de la couche support et
d. traitement thermique de la couche support obtenue dans l'étape b), pour une réticulation au moins partielle du mélange de polyuréthanes et simultanément pour lier le mélange de polyuréthanes sur/à la surface de la couche support.

14. Procédé selon la revendication 13, **caractérisé en ce que** le traitement thermique a lieu à des températures de 80 °C à 200 °C, plus préférentiellement de 100 °C à 150 °C et en particulier de 120 °C à 140 °C.

15. Étoffe thermofixable, fabriquée par un procédé selon la revendication 13 ou 14.

16. Utilisation d'une étoffe selon l'une ou plusieurs des revendications précédentes en tant que triplure pour fixage à une toile externe, en particulier une toile externe ayant une perméabilité à l'air de perméabilité à l'air < 100 dm³/s*m² sous une pression d'essai de 200 Pa, mesurée selon EN ISO 9237.
